# EUROPEAN PATENT APPLICATION

(11) **EP 1 288 178 A1**
(43) Date of publication of application: **05.03.2003**
(21) Application number: 01121044.0
(22) Date of filing: 01.09.2001
(51) Int. Cl.: C04B 38/00, C04B 38/06, B01D 39/14

(54) **Filter for molten metal filtration and method for producing such filters**

(71) Applicant: Carbon Application Technology Ltd., Staffordshire ST18 0YP (GB)
(72) Inventor: Bali, Hassan, Dr., 50939 Köln (DE)
(74) Representative: Jönsson, Hans-Peter, Dr.

(57) **Abstract**

The present invention relates to a ceramic filter for molten metal filtration that comprises a bonded network of graphitized carbon and a method for producing such filters.

## Description

The present invention relates to a ceramic filter for molten metal filtration that comprises a bonded network of graphitized carbon and a method for producing such filters.

For the processing of molten metals it is desirable to remove exogenous intermetallic inclusions such as from impurities of the raw materials, from slag, dross and oxides which form on the surface of the melt and from small fragments of refractory materials that are used to form the chamber or vessel in which the molten metal melt is formed.

Removal of these inclusions forms a homogenous melt that insures high quality of products especially in the casting of steel, iron and aluminium metals. Currently, ceramic filters are widely used due to their high ability to withstand extreme thermal shock due to their resistance to chemical corrosion and their ability to withstand mechanical stresses.

The production of such ceramic filters generally involves the mixing of ceramic powder with suitable organic binders and water in order to prepare a paste or slurry. The slurry is used to impregnate a polyurethane foam which subsequently is dried and fired at a temperature in the range of from 1000 to 1700 °C. By this treatment the combustible material is burned off during sintering to produce a porous body. US-A-2,360,929 and US-A-2,752,258 may serve as examples for the common procedure.

Also, an open pore filter that instead of a random distribution of irregular interconnecting passages consists of a series of parallel ducts passing through the material as generally being made by hydraulic pressing a damp ceramic powder and organic binder into a mold containing horizontal pins. A perforated structure is thus obtained which can be in the form of a disk or block. The perforated article is then fired at a temperature in the range of from 1000 to 1700 °C depending on the final application to produce a perforated disc. During firing a ceramic and/or glassy bond is developed.

EP 0 251 634 B1 describes an appropriate process for making defined porous ceramic bodies having smooth walled cells formed by the pore formers, and pores with round edges, which interconnect the cells.

Filters used for aluminium filtration are usually fired at around 1200 °C while those intended for the use of iron are fired at temperatures of 1450 °C and for steel at above 1600 °C.

Despite their wide spread use for metal filtration ceramic filters of the above mentioned types have- several drawbacks that limit their applicability:
1. Ceramic filters, although preheated, tend to be clogged by freezing particles on the first contact with the molten metal. For this purpose usually superheated molten metal that is metal at a temperature of about 100 °C over liquidus temperature is used for casting to prevent clogging of the filters. This practice is extreme wasteful in terms of energy and cost and any improvement that reduces processing temperature of the molten metal is of great benefit. Carbon coatings have been applied in the prior art on the surface of ceramic filters to reduce the thermal mass of the part that comes into direct contact with the molten metal.
   Also an exothermically reacting thermite material applied to a carbon-coated surface of the ceramic filter has been proposed by EP 0 463 234 B1. The latter solution, while reducing the temperature necessary for the flow of the molten metal, adds to the cost of production of the filters and very narrowly limits the applicability as the thermite coating has to be in compliance with the type of molten metal for which it is used.
   Anyway, both carbon and thermite coating serve in overcoming the drawback of high thermal mass of the ceramic filter while the challenge of several more disadvantages is not met.
2. Ceramic and glassy type bonds tend to soften and creep at high temperature which very often results in erosion of the filter and subsequent contamination of the melt.
3. Cracking due to thermal shock or chemical (reductive) corrosion by the hot metal melt is a problem often encountered with ceramic and glass bonded filters.
4. The need for extremely high firing temperatures, especially in the case of ceramics intended for steel filtration, is a severe drawback of conventional ceramic filters which is even worse when the need for high cost - ceramic raw material is considered.
5. In addition, the use of zirconia with its relatively strong background radiation is hazardous and should be avoided.

The object of the present invention is thus to provide an improved filter for metal filtration which overcomes these shortcomings of conventional ceramic or glassy bonded filters.

In the ceramic filter suitable for molten metal filtration according to the present invention a three dimensional network of graphitizable carbon bonding is used to bind ceramic powder.

In a first embodiment of the invention relates to a ceramic filter suitable for molten metal filtration comprising a bonded network of graphitized carbon.

The term "graphitizable" means that the carbon bonding obtained by pyrolysis of the carbon precursor can be converted into a graphite like bonding on heating to a higher temperature in the absence of air. Graphitizable carbon is distinguished from that of a glassy carbon by the fact that it is impossible to convert glassy carbon to a graphite like bond no matter how high temperature it was heated to.

Carbon bonding of this type exhibits the following advantageous features:
1. Significantly cheaper to produce.
2. Firing can be carried out at-much lower temperature in order to develop the full carbon bonding network from the carbon bond precursor. In general the filters have to be fired at a temperature in the range of from 500 °C to 1000 °C.
3. Significantly lower superheat is required.
4. Low thermal mass.
5. Better thermal shock resistance.
6. Contamination free.

The carbon bonded filters according to the present invention exhibit a relatively low thermal mass. A result of this is that there is no need to overheat the metal to be filtered which reduces energy consumption.

Due to the outstanding mechanical strength of the carbon bonding at high temperature no softening or bending can take place during the process of metal casting. This contributes to an even cleaner metal cast.

Graphitizable carbon bonded filters according to the present invention offer the following advantages compared with glassy carbon bonded filters:
**1.** High oxidation resistance.
**2.** Low microporosity.
**3.** Low specific surface.
**4.** Structural flexibility.
**5.** Non-brittle behavior.
**6.** Economical use.

For optimal performance the graphitized carbon that constitutes the bonded network according to the present invention should be present in an amount up to 25 % by weight of the filter, preferably up to 20 % by weight, even more preferred in an amount of at least 5 % by weight up to 15 % by weight.

In one embodiment of the present invention the carbon bonded ceramic filters are produced in a first process comprising the steps:
a) impregnating a foam made of thermoplastic material with a slurry containing a graphitizable carbon bonding precursor, ceramic powder, and optionally other additives,
b) drying, optionally followed by one or two coatings of the same slurry in order to increase the mass, followed by final drying,
c) firing the impregnated foam in non-oxidizing and/or reducing atmosphere at a temperature in the range of from 500 to 1000 °C, in particular from 600 °C to 700 °C,
whereby the carbon bonding precursor is converted at least partially or fully to a bonded network of graphitized carbon.

In this process the thermoplastic material used for the foam to be impregnated with the slurry preferably contains or consists of polyurethane.

It is advantageous to mix the carbon bonding precursor prior to impregnating the foam with ceramic powder, water, organic binder, and additives to control the rheology, which in one embodiment of the invention may be present in an amount of up to 2 parts by weight, preferably in a range of from 0.1 to 2 parts by weight.

In another embodiment of the present invention a second type of carbon bonded ceramic filter is produced by a process comprising the steps
a) pressing a semi-damp mixture comprising ceramic powder and a graphitizable bonding precursor, and optionally other additives in a hydraulic press,
b) pressing to obtain a perforated article in the shape of a disk or a block,
c) firing the perforated article in non-oxidizing and/or reducing atmosphere at a temperature in the range of from 500 °C to 1000 °C, in particular from 600 °C to 700 °C,
whereby the carbon bonding precursor is converted partially or fully to a bonded network of graphitized carbon.

The source of the carbon bond, that is the carbon bond precursor is preferably high melting pitch (HMP) because it offers optimal properties with respect to workability, cost and product quality. However, it must be noted that other carbon bond precursors can also be used to produce carbon bonded materials, such as synthetic or natural resins and sinterable carbon as long as it is graphitizable and converted to a bonded network of graphitized carbon upon firing according to the present invention. Thus, synthetic resin binders that form a glassy carbon which cannot be converted to graphite may not be considered as carbon bond precursors as the product suffers from low oxidation resistance, low mechanical strength, high brittleness and lower heat resistance.

Also, for economical as well as ecological reasons the carbon bond precursor should be compatible with water. However, organic-solvent based carbon bonding precursors may be used as well.

In further embodiments these processes use a slurry (for the production of a carbon bonded ceramic filter of the first type) or a semi-damp mixture (for the production of the carbon bonded ceramic filter of the second type) that comprises:
a graphitizable carbon bonding precursor in the range of from 5 to 25 parts by weight,
ceramic powder in the range of from 20 to 80 parts by weight,
anti-oxidation material in the range of from 0 to 80 parts by weight,
graphite in the range of from 0 to 90 parts by weight,
organic binder in the range of from 0 to 10, in particular 0.2 to 2 parts by weight and,
dispersion agent in the range of from 0 to 4, in particular 0.1 to 2 parts by weight.

Water is added in a quantity as required. For the purpose of slurry-preparation, 20 to 70 part by weight are necessary depending on the nature of the ceramic filler materials. For the semi-damp mixture used for pressing, water is necessary in an amount of from 2 to 10 parts by weight, depending of the nature of the ceramic filler materials.

The ceramic powder may comprise zirconia, silica, alumina, brown fused alumina, magnesia, any type of clay, talcum, mica, silicon carbide, silicon nitride and the like or any mixture thereof. Graphite may also be used as a substitute for ceramic powder.

Preferred anti-oxidation materials according to the present invention are metallic powder such as steel, iron, bronze, silicon, magnesium, aluminum, boron, zirconium boride, calcium boride, titanium boride and the like, and/or glass frits containing 20 to 30 weight percent of boric oxide.

Organic binders that are preferred according to the present invention are green binders such as polyvinyl alcohol (PVA), starch, gum arabic, sugar or the like or any combination thereof. These binders may be added to improve the mechanical properties of the fillers during handling prior to firing. Starch and gum arabic may also be used as thickening agent.

Preferred dispersion agents according to the present invention are Despex®, ligninsulphonate or the like, or any combination thereof which help to reduce the water level in the slurry and improve the rheology.

In a further embodiment of the present invention the slurry or semi-damp mixture may comprise a plasticizer such as polyethylene glycol (preferred molecular weight: 500 to 10000) in the range of from 0 to 2 parts by weight, preferably 0,5 to 1 part by weight and/or an anti-foam agent such as silicon anti-foam in the range of from 0 to 1 part by weight, preferably 0,1 to 0,5 parts by weight.

The invention is further illustrated by the following examples:

### Examples:

As graphitizable high melting pitch (HMP) a coal-tar pitch was used having a glass transition temperature of 210 °C, a coking value of 85 %, an ash value of 0,5 % and which was available as a fine powder.

In all examples the resultant mixture was fired in inert atmosphere at a temperature in the range of from 600 °C to 900 °C for 20 to 120 min at a heating rated in the range of from 1 ^C/min to 10 °C/min.

### A: Filters according to the first type:

A polyurethane foam was cut to the required size and impregnated with a slurry containing all or some of the following, a high melting pitch powder, ceramic powder, anti-oxidant material, organic binder, dispersion agent, anti-foam, etc., as mentioned in Table 1. The filter was either impregnated manually or by a machine containing rollers used for this purpose. After impregnation the filter was dried using hot air and/or a microwave drier. The coating was applied by a spraying air gun. The filter was dried once more and transferred to a firing furnace with reducing or non-oxidizing atmosphere. The furnace was heated at a rate from 1 °C/min to 10 °C/min depending on the composition of the slurry, size of the filter, size of the furnace etc.

**Table 1:**

| Ingredients [parts by weight] | Example 1 | Example 2 | Example 3 | Example 4 | Example 5 | Example 6 |
|---|---|---|---|---|---|---|
| Zirconia powder | 800 | 600 | | | | |
| Graphite | | 200 | | | 250 | |
| Graphite powder | | | 760 | | | |
| Alumina powder | | | | 750 | 500 | |
| Silicon carbide powder | | | | | | 750 |
| HMP | 200 | 220 | 240 | 220 | 250 | 220 |
| Water | 320 | 400 | 600 | 370 | 450 | 450 |
| Silicon powder | | | | | 40 | |
| Borate frit powder | | | | | 30 | |
| Green binder | 10 | | | | | |
| Thickening agent | 3 | 5 9 | | 5 | 5 | 6 |
| Wetting agent | | | 1 | 1 | | |
| Dispersion agent | 12 | 15 | 20 | 15 | 15 | 15 |
| Plasticizer | 5 | 5 | 5 | 5 | 5 | 5 |
| Anti-foam agent | 1 | 1 | 1 | 1 | 1 | 1 |

These filters have a modulus of rupture in the range of 0.6 to 1.2 Mpa depending on composition, weight etc. The heavier the filter the higher is the strength. These filters are significantly lighter than those made from ceramic or glass bonded material. They are also significantly cheaper. During field trials it was found that no superheat is required when using these filters since extra heat was generated upon contact of molten metal with the filter (exothermic reaction).

Also heating these filters to a temperature above 1500 °C results in forming a graphite like bonding. Although such treatment would improve the overall properties of the filter, it is not required for the purpose of molten metal filtration.

### B: Filters according to the second type:

A mixture was prepared in a Hobart or Eirich mixer, the mixture comprising ceramic powder, high melting pitch, organic binder, plasticizer and water. The aim of the mixing process was to make a semi-damp and homogenous mixture. The mixture was aged for 24 hours prior to pressing. A predetermined weight of the mixture was placed in a steel mold which contained vertical pins. Pressing the mix produced a perforated article. This perforated article was then removed form the mold, dried and fired in a non-oxidizing or reducing atmosphere at a temperature of 700 °C for 1 h with a heating rate of 2 °C/min.

**Table 2:**

| | 1 | 2 | 3 | 4 | 5 | 6 | 7 | 8 | 9 | 10 |
|---|---|---|---|---|---|---|---|---|---|---|
| Zirconia powder | 850 | | | | 660 | | | | | |
| HMP | | 150 | 200 | 200 | 200 | 200 | 100 | 100 | 150 | 200 |
| Cal. Alumina | | | 300 | 800 | | | 250 | 200 | 200 | 200 |
| BFA | 500 | | | | | 450 | 400 | 450 | 400 | |
| Graphite | | | | 750 | 200 | 200 | 200 | 100 | 100 | |
| Silicon | | | | | | | | 40 | 40 | 40 |
| Borate frit powder | | | | | | | 20 | 20 | 20 | |
| Feldspar | | | | | | | 40 | 40 | 40 | 20 |
| PVA | 20 | 20 | 20 | 25 | 20 | 20 | 20 | 20 | 20 | |
| PEG (4000) | 8 | 8 | 8 | 8 | 8 | 8 | 8 | 8 | 8 8 | |
| Water | 40 | 40 | 40 | 55 | 80 | 40 | 40 | 40 | 40 | 40 |

The graphitizable carbon bonded perforated filter was used in a field trial to filter molten steel. It was found that the filter did not require molten metal superheat since it generated heat on contact of molten metal with the filter which was enough to keep the molten steel flow during filtration. This was due to the exothermic reaction of the filter surface and the molten steel. Also, the filter did not suffer from thermal shock or distortion during the test. These filters were considerably lighter than those of ceramic or glass bonded material. Ceramic or glass bonded filters require superheat between 80 to 150 °C. This large superheat renders the use of ceramic or glass bonded filters undesirable for steel filtration despite their low cost compared to open pore filters. These advantages will open the door for economic and efficient filtration of casting steel.

## Claims

1. A ceramic filter suitable for molten metal filtration comprising a bonded network of graphitized carbon.

2. The filter of claim 1 wherein the graphitized carbon constitutes up to 25 % by weight, in particular up to 15 % by weight.

3. A method to produce ceramic filters according to claim 1 or 2, comprising the steps
a) impregnating a foam made of thermoplastic material with a slurry containing a graphitizable carbon bonding precursor, ceramic powder, and optionally other additives,
b) drying, optionally followed by one or two coatings of the same slurry in order to increase the mass, followed by final drying,
c) firing the impregnated foam in non-oxidizing and/or reducing atmosphere at a temperature in the range of from 500 to 1000 °C, in particular from 600 °C to 700 °C,
whereby the carbon bonding precursor is converted at least partially or fully to a bonded network of graphitized carbon.

4. The method of claim 3 utilizing a thermoplastic foam that contains polyurethane.

5. The method of claims 3 or 4 wherein the carbon bonded precursor is mixed with ceramic powder, water, organic binder, and additives to control the reology, prior to impregnating the foam.

6. A method to produce the ceramic filters according to claims 1 or 2, comprising the steps
a) pressing a semi-damp mixture comprising ceramic powder and a graphitizable bonding precursor, and optionally other additives in a hydraulic press,
b) pressing to obtain a perforated article in the shape of a disk or a block,
c) firing the perforated article in non-oxidizing and/or reducing atmosphere at a temperature in the range of from 500 °C to 1000 °C, in particular from 600 °C to 700 °C, whereby the carbon bonding precursor is converted partially or fully to a bonded network of graphitized carbon.

7. The method of any one of claims 3 to 7 wherein high melting pitch (HMP) is used as the graphitizable carbon bonding precursor.

8. The method of any one of claims 3 to 8 wherein a slurry or semi-damp mixture is used comprising:
graphitizable carbon bonding precursor in the range of from 5 to 25 parts by weight,
ceramic powder in the range of from 20 to 80 parts by weight,
anti-oxidation material in the range of from 0 to 80 parts by weight,
graphite in the range of from 0 to 90 parts by weight,
organic binder in the range of from 0 to 10, in particular 0.2 to 2 parts by weight and,
dispersion agent in the range of from 0 to 4, in particular 0.1 to 2 parts by weight.

9. The method of claim 8 wherein zirconia, silica, alumina, brown fused alumina, magnesia, any type of clay, talcum, mica, silicon carbide, silicon nitride and the like or a mixture thereof, or graphite, is used as the ceramic powder.

10. The method of claim 8 or 9 wherein metallic powders such as steel, iron, bronze, silicon, magnesium, aluminium, boron, zirconium boride, calcium boride, titanium boride and the like, and/or glass frits containing 20 to 30 weight percent of boric oxide are used as the anti-oxidation material.

11. The method of any one of claims 8 to 10 wherein a green binder such as PVA, starch, gums, sugar or the like or a combination thereof is used as the organic binder.

12. The method of any one of claims 8 to 11 wherein lignisulphonate is used as the dispersion agent.

13. The method of any one of claims 8 to 12 wherein a slurry or semi-damp mixture is used that further comprises:
a plasticizer such as polyethylene glycol (molecular weight: 500 to 10000) in the range of from 0 to 2 parts by weight,
an anti-foam agent such as silicon anti-foam in the range of from 0 to 1 part by weight.
